# DEMANDE DE BREVET EUROPEEN

(11) **EP 4 564 823 A1**
(43) Date de publication de la demande: **04.06.2025**
(21) Numéro de dépôt: 24216278.2
(22) Date de dépôt: 28.11.2024
(51) Int. Cl.: H04N 21/24

(54) **PASSERELLE POUR ENCODAGE LOCAL DE CONTENUS DE TÉLÉVISION NUMÉRIQUE TERRESTRE EN SEGMENTS DE CONTENUS ADAPTATIFS SUR HTTP (HAS)**

(30) Priorité: 01.12.2023 FR 2313443
(71) Demandeur: Orange, 92130 Issy-les-Moulineaux (FR)
(72) Inventeur: MARCHAND, Hervé, 92326 CHATILLON CEDEX (FR); GASTE, Olivier, 92326 CHATILLON CEDEX (FR)
(74) Mandataire: Regimbeau

(57) **Abrégé**

Procédé de gestion de l'accès par une entité de gestion (G) à des contenus disponibles sur au moins un premier serveur (S_{OTT}) fournissant lesdits contenus sous forme de segments de données à travers un réseau de télécommunication de données (WAN) et un deuxième serveur fournissant un service de diffusion distinct dudit réseau de télécommunication de données (WAN), ledit procédé comprenant, dans ladite entité de gestion, , une sélection d'un serveur entre ledit premier serveur et ledit deuxième serveur, et, lorsque ledit deuxième serveur est sélectionné : :
- une demande d'accès (S2) à un contenu auprès du deuxième serveur (S_{TNT}) ;
- un encodage (S3) d'un flux de segments à partir dudit contenu ;
- une publication (54) d'informations relatives audit contenu adaptées pour permettre de décoder ledit flux de segments.

## Description

### DOMAINE TECHNIQUE

La présente invention est relative à la distribution de contenus, notamment de contenus audio-visuels, à travers de réseaux de télécommunications vers des clients finaux en vue de leur production pour des utilisateurs.

Elle s'applique particulièrement à la distribution par des entités de gestion, déployés sur des équipements et prévues pour diffuser ces contenus sous forme de segments.

Une part très importante de la distribution de contenus audio-vidéos est effectuée depuis un serveur d'un fournisseur de contenu vers les clients à travers des réseaux de télécommunication publics sans contrôle sur celui-ci. Le service de distribution de contenu audio-vidéo est en généralement fourni par une entité distincte de l'opérateur de réseaux de télécommunication publics, et notamment du fournisseur d'accès à Internet. Ce type de service est typiquement appelé « service par contournement » ou, en anglais, « *over-the-top service* », OTT.

Ces services de distribution par contournement, OTT, comprennent la distribution privée de contenu audio-vidéos, via des plateformes ou réseaux sociaux, mais aussi des distributions de contenu de type « vidéo à la demande » ou en temps-réel, à partir de serveur de contenu.

Les services en ligne en OTT permettent l'accès à tous types de média, aussi bien audio, vidéo ou texte. Ainsi, on trouve des services de musique, de podcast, de films, séries, documentaires, de presse, etc.

La diffusion de contenu audio-vidéo en OTT s'appuie classiquement sur une diffusion de contenu sous forme de segments. Un même contenu peut être rendu disponible en différents flux de segments, les segments ayant alors des tailles différentes correspondant à des résolutions différentes. Les clients récupèrent le contenu segment par segment, ces segments correspondants à une résolution choisie. Cette résolution peut être dynamiquement modifiée en cours de diffusion du contenu, en fonction notamment de la bande-passante disponible sur le réseau de télécommunication reliant le serveur de contenu et le client final, et de la charge de celui-ci.

Ce type de service et cette technologie permettant leur déploiement posent toutefois une contrainte très forte sur le réseau de télécommunication notamment lorsqu'un contenu est demandé par un très grand nombre de clients : le serveur de contenu doit alors transmettre des flux de segments de données, à des résolutions diverses, à cet ensemble de clients.

Il peut dès lors être nécessaire de surdimensionner le réseau de télécommunication afin de pouvoir absorber les pics de trafic qui sont rencontrés lors de la diffusion d'un contenu à forte audience.

Afin de diminuer sensiblement cette contrainte, il est possible de diffuser un tel contenu en mode « multicast ». Il devient alors possible de mutualiser une transmission du contenu, dans une résolution donnée, depuis le serveur de contenu vers différents noeuds d'un arbre de transmission afin de la diffuser vers l'ensemble des clients ayant requis ce contenu dans cette résolution. On peut ainsi économiser énormément de bande passante.

Toutefois, cette technologie nécessite de modifier l'infrastructure du réseau de télécommunication afin de pouvoir déployer un tel arbre de transmission, constitué par exemple de noeuds adaptés pour mettre en oeuvre le protocole IGMP (pour « Internet Group Management Protocol » en anglais) défini dans le RFC 3376 de l'IETF pour sa version 3.

Il existe donc un besoin d'améliorer les propositions actuelles de l'état de la technique.

### EXPOSÉ DE L'INVENTION

L'invention vise à éviter d'avoir à apporter des modifications sur le réseau de télécommunications, dans la mesure où celui-ci peut être géré par une entité distincte de celle gérant le serveur de contenu audio-visuel. Elle vise donc à s'appuyer uniquement sur les capacités des équipements des réseaux locaux des utilisateurs finaux.

À ces fins, selon un premier aspect, la présente invention peut être mise en oeuvre par un procédé de gestion de l'accès par une entité de gestion à des contenus disponibles sur au moins un premier serveur fournissant lesdits contenus sous forme de segments de données à travers un réseau de télécommunication de données et un deuxième serveur fournissant un service de diffusion distinct dudit réseau de télécommunication de données, comprenant, dans ladite entité de gestion, une sélection d'un serveur entre ledit premier serveur et ledit deuxième serveur, et, lorsque ledit deuxième serveur est sélectionné :
- une demande d'accès à un contenu auprès du deuxième serveur ;
- un encodage d'un flux de segments à partir dudit contenu;
- une publication d'informations relatives audit contenu adaptées pour permettre de décoder ledit flux de segments.

Ainsi, cette passerelle permet notamment de dérouter les trafics importants vers un réseau tiers, de type OTT par exemple, distinct du réseau de télécommunication de données (Internet), et également d'offrir une vue unifiée des contenus disponibles auprès de service de contenu de natures différentes.

Suivant des modes de réalisation préférés, l'invention comprend une ou plusieurs des caractéristiques suivantes qui peuvent être utilisées séparément ou en combinaison partielle entre elles ou en combinaison totale entre elles :
- ledit deuxième serveur est sélectionné lorsque ledit contenu est un contenu particulier. On peut ainsi aiguiller le trafic en fonction de la nature du contenu et/ou d'un choix du gestionnaire de contenu de considérer un contenu comme « particulier ».
- le service de diffusion distinct dudit réseau de télécommunication est un service de télévision numérique terrestre, TNT. On peut ainsi tirer profit de ce mode de diffusion, mais d'autres services de diffusion sont également possibles.
- ledit contenu est un contenu dont l'audience est supérieure à un seuil donné. Ainsi, dès lors qu'un contenu est à forte audience (courante ou prédite), et donc susceptible d'engendrer une charge importante sur le réseau, il est possible de tirer profit des fonctionnalités locales de la passerelle pour décharger le réseau et les serveurs de contenus.
- le procédé comprend une détermination préalable d'un contenu, ladite détermination se basant sur des prédictions de trafic pour des contenus disponibles. Cela permet d'éviter un engorgement dans le cas d'un pic de trafic et de ne permettre qu'une réaction « après coup ». La prédiction permet de basculer vers un service de diffusion distinct avant même que le réseau et le premier serveur de contenu ne soient véritablement chargés.
- lesdites informations comprennent un ensemble de manifestes générés par l'entité de gestion. Ainsi, pour les clients, l'ensemble des contenus sont présentés et sont accessibles de la même façon.
- lesdits manifestes et lesdits segments ne sont relatifs qu'à une unique résolution dudit contenu, ce qui permet de minimise la charge de la passerelle en supposant que celle du réseau local soit peu pénalisante.

Un autre aspect de l'invention concerne une entité de gestion de l'accès par un client à des contenus disponibles sur au moins un premier serveur fournissant lesdits contenus sous forme de segments de données à travers un réseau de télécommunication de données et un deuxième serveur fournissant un service de diffusion distinct dudit réseau de télécommunication de données, ladite entité de gestion comprenant un processeur configuré pour réaliser les étapes suivantes :
- une sélection d'un serveur entre ledit premier serveur et ledit deuxième serveur, et, lorsque ledit deuxième serveur est sélectionné :
- une demande d'accès à un contenu auprès du deuxième lorsque le contenu est un contenu particulier;
- un encodage d'un flux de segments à partir dudit contenu ;
- une publication d'informations relatives audit contenu adaptées pour permettre de décoder ledit flux de segments

Un autre aspect de l'invention concerne une passerelle comportant une entité de gestion telle que précédemment décrite. Également, un autre aspect de l'invention concerne un client comportant une entité de gestion telle que précédemment décrite.

Un autre aspect de l'invention concerne un programme d'ordinateur apte à être mis en oeuvre sur une entité de gestion, le programme comprenant des instructions de code qui, lorsqu'il est exécuté par un processeur, réalise les étapes du procédé tel que précédemment défini.

Un autre aspect de l'invention concerne un support de données sur lequel a été mémorisé au moins une série d'instructions de code de programme pour l'exécution d'un procédé tel que précédemment défini.

### BRÈVE DESCRIPTION DES DESSINS

D'autres aspects, buts, avantages et caractéristiques apparaîtront mieux à la lecture de la description détaillée suivante de formes de réalisation préférées de celle-ci, donnée à titre d'exemple non limitatif, et faite en référence aux dessins annexés sur lesquels :
la figure 1 illustre un contexte de mise en oeuvre d'un procédé selon des modes de réalisation.
la figure 2 illustre un exemple d'architecture fonctionnelle d'une entité de gestion selon un mode de réalisation.
La figure 3 schématise un chronogramme d'un procédé selon un mode de réalisation.

### EXPOSÉ DÉTAILLÉ DE MODES DE RÉALISATION PARTICULIERS

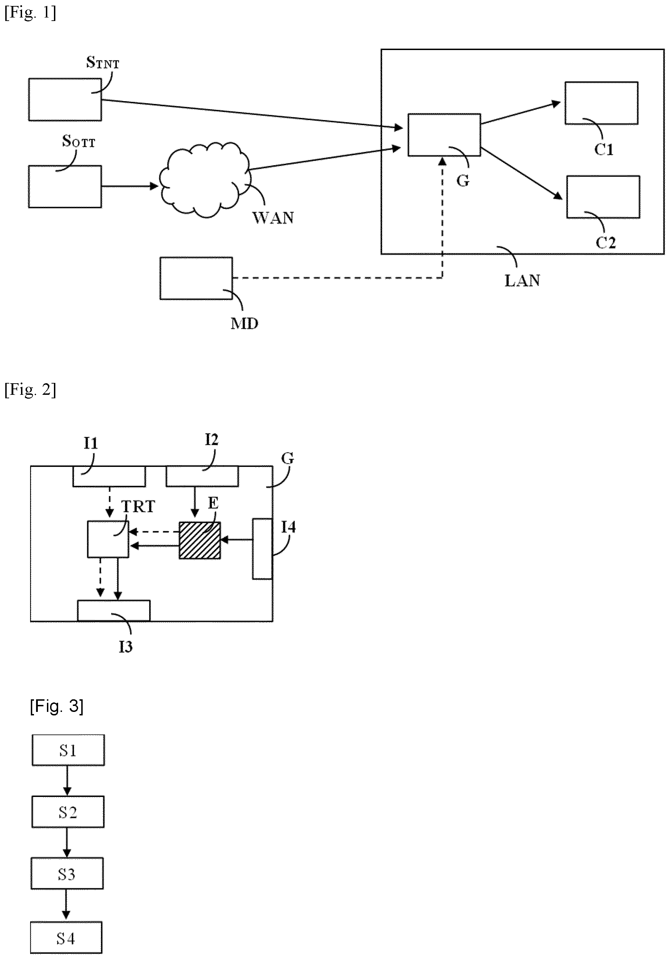

Sur la **figure 1** est illustré un réseau de télécommunication WAN permettant d'acheminer des flux de données représentant un contenu audio-visuel, formés de segments, depuis un serveur de contenu S_{OTT} vers des clients C1, C2.

Ces flux de données peuvent être des flux associés à des contenus audio-vidéo (c'est-à-dire contenant des données vidéos et/ou des données audios), et éventuellement des contenus interactifs correspondant par exemple à des jeux vidéos. Il peut s'agir de contenus à la demande ou de contenus en direct, de type IPTV (sigle de « *Internet Protocol Television* » en anglais), mais d'autres modes de transmission sont également envisageables.

Ce réseau de télécommunication peut typiquement être composé de plusieurs réseaux interconnectés, notamment un réseau d'accès permettant aux clients de se connecter à un réseau principal (lui-même constitué d'une interconnexion de sous-réseaux) ou « backbone » en anglais. Ce réseau WAN est communément appelé Internet.

Les clients peuvent être connectés à un réseau local, LAN, par exemple un réseau local sans fil, leur permettant d'accéder à une passerelle vers le réseau d'accès à Internet. Ce réseau local sans fil, communément appelé WLAN pour « Wireless Local Area Network » en anglais peut être conforme aux protocoles Wi-Fi, ou wifi, tels que spécifiés dans les documents normatifs de l'IEEE de la famille 802.11 (ou ISO/CEI 8802-11).

Ce réseau local LAN peut être un réseau interne à un domicile (réseau domestique), par exemple, permettant de connecter tous les équipements, ou clients, d'un utilisateur ou d'une famille. Le réseau local LAN peut également être un réseau interne d'une entreprise, permettant de connecter les équipements, ou clients, des différents utilisateurs de l'entreprise.

Les clients peuvent être de différentes natures, leur point commun étant de disposer de moyens permettant la connexion au réseau. Il s'agit essentiellement de composants de radiocommunication et de composants électroniques et informatiques permettant la mise en oeuvre des piles protocolaires nécessaires à la gestion des protocoles associés au réseau et à la réception et à l'émission de paquets de données.

Les clients peuvent également produire des contenus audio-vidéos. Ceux-ci peuvent être produits sur un écran contenu ou associé aux clients, ou bien via un projecteur, ou bien via des haut-parleurs, par exemple, dans le cas d'un contenu uniquement audio (radio...).

Les clients C1, C2 peuvent être de différentes natures : ordinateur (portable ou fixe), terminal mobile de communication de type « smartphone », tablette numérique, téléviseur connecté, etc.

Le téléviseur peut être nativement connecté ou l'être par le truchement d'un dispositif associé tel que par exemple une clé TV connectée au téléviseur, généralement en HDMI. Un exemple de dispositif externe communiquant avec un téléviseur TV est Chromecast. Le Chromecast est un appareil lecteur de flux multimédias (passerelle multimédia) en temps réel développé et commercialisé par Google. L'appareil se branche sur le port HDMI d'un téléviseur et communique, par connexion Wi-Fi, avec un autre appareil connecté à Internet (ordinateur, smartphone, tablette...), afin d'afficher sur le téléviseur le contenu multimédia reçu depuis une application compatible avec la technologie Google Cast, depuis le navigateur Google Chrome présent sur un ordinateur, ou depuis certains appareils Android.

Ces différents clients sont également prévus pour la réception et le traitement des segments de contenu.

En particulier, ils peuvent disposer d'une application logicielle (par exemple un navigateur ou « browser » en anglais) permettant d'accéder à des serveurs web ou autres, qui permettent de mettre à disposition des contenus audio-vidéos aux utilisateurs des clients. Ainsi, les différents échanges entre les clients et les serveurs de contenus S_{OTT} peuvent se faire conformément aux protocoles couramment utilisés sur le réseau Internet, notamment le protocole HTTP.

La diffusion en flux adaptatif dynamique sur HTTP (en anglais : Dynamic Adaptive Streaming over HTTP) souvent nommé DASH ou MPEG-DASH ou encore HAS (pour « HTTP Adaptive Streaming » en anglais) est un standard de format de diffusion audiovisuelle sur Internet. Il se base sur la préparation du contenu en différentes présentations de qualité et débit variable, découpées en segments de courte durée (quelques secondes). Chacun de ces segments est rendu disponible individuellement au moyen d'un protocole d'échange. Le protocole principalement ciblé est HTTP comme l'indique le titre, mais la spécification admet explicitement que d'autres protocoles (par exemple FTP) puissent être utilisés. L'organisation des segments et les paramètres associés sont publiés dans un manifeste au format XML.

La norme ISO/IEC 23009 finalisée fin 2011 définit le format du manifeste ainsi que celui des segments basés sur des formats de conteneur MPEG : ISO Base Media File Format (ISO/IEC 14496-12) et MPEG-2 Transport Stream (ISO/IEC 13818-1), et donne des indications pour la définition d'autres formats de segment.

Ce mode de distribution est typiquement appelé ABR pour « Adaptive Bit Rate » en anglais.

Les différentes résolutions dans lesquels un contenu est disponible sont publiées dans le fichier manifeste. Les clients peuvent choisir la résolution souhaitée parmi celles disponibles lorsqu'ils requièrent les segments suivants du contenu. Ils peuvent ainsi s'adapter dynamiquement à la bande passante disponible sur le réseau WAN en fonction d'un rendu estimé ou mesuré.

Les résolutions correspondent à des qualités du contenu vidéo (et/ou audio) et conséquemment à des débits différents sur le réseau de télécommunication.

Les qualités disponibles en ABR peuvent varier en fonction de la plateforme de streaming vidéo utilisée, mais en général et actuellement, les qualités courantes comprennent :
- Très basse qualité : souvent adaptée pour les utilisateurs avec des connexions Internet très lentes ou instables, cette qualité peut avoir une résolution de 240p et un débit de 200 kbps.
- Basse qualité : cette qualité convient pour les connexions Internet plus stables mais encore relativement lentes, avec une résolution de 360p et un débit de 400-700 kbps.
- Qualité standard : cette qualité convient pour la plupart des connexions Internet, avec une résolution de 480p ou 720p et un débit de 800 kbps à 2 Mbps.
- Haute qualité : cette qualité convient pour les connexions Internet rapides et fiables, avec une résolution de 1080p et un débit de 2-5 Mbps.
- Très haute qualité : cette qualité convient pour les connexions Internet très rapides, avec une résolution de 4K et un débit de plus de 10 Mbps.

Il est important de noter que les qualités disponibles peuvent varier en fonction des capacités de bande passante de l'utilisateur et du réseau, ainsi que de la qualité et de la complexité du contenu vidéo diffusé. Le fichier « manifeste » peut alors être modifié en fonction des variations effectuées au niveau du réseau ou du serveur de contenu.

Une entité de gestion G peut être en outre être prévue. Cette entité de gestion est localisée dans le réseau local LAN. Elle peut être mise en oeuvre par un équipement connecté à ce réseau local.

Cet équipement peut être une passerelle d'accès au réseau de télécommunication de données (Internet), ou bien un client (terminal de télécommunication, ordinateur, téléviseur...). Cet équipement peut être également un décodeur (ou « set top box » en anglais). Il peut également s'agir d'un équipement distinct, spécifiquement conçu pour mettre en oeuvre les fonctionnalités de l'entité de gestion G.

L'entité de gestion G peut avoir pour fonction de permettre aux clients C1, C2 d'accéder aux contenus offerts par le ou les serveurs de contenu S_{OTT}. En particulier, elle peut agréger des contenus proposés par différents serveurs de contenu et les présenter sous une interface uniforme.

En particulier, l'entité de gestion G peut publier des informations relatives aux contenus disponibles auprès de différents serveurs de contenus S_{OTT} afin que les clients puissent y avoir accès et puissent éventuellement les sélectionner pour déclencher leur téléchargement.

En particulier, l'entité de gestion G peut récupérer les manifestes auprès des différents serveurs de contenus S_{OTT} et les publier aux clients afin qu'ils puissent sélectionner un contenu souhaité dans une résolution souhaitée, et déclencher le téléchargement des segments souhaités.

Le téléchargement peut se faire par le truchement de l'entité de gestion G ou bien directement depuis le serveur de contenu vers le client. Dans ce second cas, le rôle de l'entité de gestion G est de fournir le manifeste qui contient la référence des segments à récupérer auprès d'un serveur de contenu S_{OTT} identifié.

En outre, l'entité de gestion peut agréger des contenus issus de sources hétérogènes. Il peut notamment être prévu qu'elle dispose d'une interface permettant la réception de contenu de télévision numérique terrestre TNT depuis un serveur de contenu S_{TNT}.

La télévision numérique terrestre, ou *« Digital terrestrial television* » (DTT) en anglais, est un mode de diffusion de contenu multimédia, principalement vidéo, par un réseau spécifique de réémetteurs hertziens. Selon les pays, différents standards ont été établis. Ainsi, le standard DVB-T pour l'Europe, ATSC pour les Etats-Unis, DTMB pour la Chine, etc.

D'autres services de diffusion de contenus, distincts du réseau de télécommunication WAN peuvent également être utilisés par l'entité de gestion G (et l'équipement la mettant en oeuvre), telles qu'un service de diffusion par câbles, un service de diffusion par satellite, etc.

La **figure 2** illustre une architecture fonctionnelle, très haut niveau et schématique, d'une telle entité de gestion G, selon un mode de réalisation.

Ainsi qu'évoqué précédemment, cette entité de gestion comporte une première interface I1 adaptée pour réceptionner des contenus sous forme de segments de données depuis un premier serveur de contenus S_{OTT} à travers un réseau de télécommunication de données WAN.

Elle comporte également une seconde interface I2 adaptée pour réceptionner des contenus d'un serveur S_{TNT} d'un service de diffusion distinct dudit réseau de télécommunication de données, ainsi que précédemment expliqué. Cette interface est distincte puisque l'acheminement des données provenant du serveur S_{TNT} utilise des moyens techniques distincts de ceux du réseau de télécommunication de données WAN empruntés pour les segments provenant des serveurs de contenus S_{OTT}.

Elle comporte également des moyens de traitement TRT permettant de mettre en oeuvre les différents mécanismes décrits, et notamment la production d'informations relatives aux contenus aux clients connectés à l'entité de gestion, à travers une troisième interface I3.

Elle comporte en outre un encodeur E adapté pour encoder un flux de segments à partir d'un contenu reçu depuis la seconde interface I2, ainsi qu'une quatrième interface I4 adapté pour la réception de messages de gestion.

Sur la figure 2, les flèches hachurées illustrent un flux possible de manifestes, tandis que les flèches pleines illustrent d'autres types de trafic, notamment les segments de contenu ou un contenu transmis de façon continue.

Il est à noter que cette figure illustre une architecture fonctionnelle à des fins explicatives uniquement. Il est évident pour l'homme du métier que l'entité de gestion peut comporter de nombreuses autres fonctions et que les fonctions illustrées peuvent interagir de différentes façons.

Comme évoqué précédemment, cette entité de gestion G est une entité fonctionnelle susceptible d'être intégrée dans différents équipements liés au réseau local LAN.

L'équipement mettant en oeuvre cette entité de gestion G peut notamment comprendre une passerelle adaptée pour fournir l'accès au réseau de télécommunication de données (Internet) au client. Il peut aussi avoir pourfonction de fournir un réseau local LAN pour ces clients (routeur WiFi...). Un exemple d'un tel équipement domestique est la Livebox^{™} de la société Orange.

L'équipement mettant en oeuvre l'entité de gestion G peut également comprendre un client C1, C2.

L'équipement mettant en oeuvre l'entité de gestion G peut également comprendre un décodeur, ou « set top box », STB, en anglais. Un tel décodeur est classiquement déployé pour la réception et le décodage de contenus issus de réseaux de distribution tels que pour la télévision numérique terrestre, TNT.

L'équipement mettant en oeuvre l'entité de gestion G peut également comprendre un équipement spécifique, ou au sein d'un client. A titre d'exemple, elle peut être intégrée dans un dispositif de type « clé TV ». Ainsi, une telle clé TV peut apporter la connectivité à une télévision (ou équipement similaire) et, en même temps, les fonctionnalités propres à l'entité de gestion G.

Selon toutes ces mises en oeuvre, l'entité de gestion G est connectée au réseau local domestique LAN, de sorte que tous les clients peuvent y avoir accès et bénéficier de ses fonctionnalités.

La **figure 3** illustre un organigramme d'un procédé pouvant être mis en oeuvre par cette entité de gestion G.

Dans une étape S1, un contenu est déterminé.

Ce contenu peut être déterminé parmi les contenus disponibles sur les serveurs de contenu S_{OTT} ou bien il peut s'agir d'un contenu non disponible sur ces serveurs.

Le contenu peut par exemple être un contenu particulier. Par « particulier », on signifie que ce contenu a une nature spécifique et/ou est identifié comme particulier par un gestionnaire du contenu, ou administrateur. Typiquement, un contenu peut être identifié comme « particulier » dans le seul but de déclencher le traitement particulier décrit ici.

Ce contenu peut être déterminé en raison d'une forte audience ou d'une prévision de forte audience. En particulier, le contenu particulier peut être un contenu dont l'audience (courante ou prédite) est supérieure à un seuil donné.

Par exemple, un contenu lié à un événement important est susceptible d'engendrer une forte audience et donc être déterminé comme contenu particulier. Par exemple, un match de football important, une émission d'actualité sur une catastrophe humaine ou naturelle, un événement politique important (discours du président de la République...), etc. sont des événements pouvant donner lieu à des trafics importants.

Par exemple, la détermination du (ou des) contenu « particulier » (ou spécifiquement traité) peut être basée sur des prédictions de trafic pour des contenus disponibles.

En particulier, un (ou plusieurs) contenu peut être sélectionné par un administrateur ou par un système automatique ayant accès aux tendances de trafic et adapté pour établir des prévisions ou pour déterminer des franchissements de seuil du trafic associés aux différents contenus.

Un dispositif de gestion MD (sur la figure 1) peut alors transmettre un message de gestion à l'entité de gestion G (par exemple sur son interface I4) indiquant un contenu que l'entité de gestion G peut ainsi déterminer.

Lorsqu'un contenu est ainsi déterminé, par exemple lorsque le contenu est un contenu particulier, dans une étape S2, la passerelle peut transmettre une demande d'accès à ce contenu au serveur S_{TNT} d'un service de diffusion distinct du réseau de télécommunication de données WAN. La mise en oeuvre de la demande d'accès peut dépendre du type de serveur et de la technologie sous-jacente. Il peut typiquement s'agir d'un abonnement. Cette demande d'accès peut déclencher la transmission par ce serveur S_{TNT} du contenu souscrit vers l'interface I2 de l'entité de gestion G.

Dans une étape S3, l'entité de gestion G peut alors encoder le contenu reçu du serveur S_{TNT} en un flux de segments de contenu. Ces segments sont par exemple conformes à l'encodage pour une distribution en flux adaptatif dynamique sur http (HAS pour « *HTTP Adaptive Streaming* » en anglais).

Le contenu reçu sur l'interface I2 n'étant pas acheminé à travers un réseau de télécommunication de données, il ne subit pas les fluctuations de charge et de trafic et n'a donc pas être à être adaptatif. D'une façon générale, ce contenu consiste en un flux de données continu, sans segmentations selon différentes résolutions.

Typiquement, les différentes normes de télédiffusion numérique de terre exploitent le flux de transport MPEG. Le contenu est principalement constitué d'un flux de trames MPEG que l'entité de gestion G peut recevoir au fil de l'eau.

Une différence majeure est que la réception se fait continument, au fil de l'eau, sans nécessité pour le récepteur (ici l'entité de gestion G) de requérir le contenu segment par segment, en envoyant autant de requête vers l'émetteur (ici le serveur de contenu) sur la base d'un manifeste. Au contraire, une fois souscrit à un contenu, le récepteur reçoit les données correspondantes jusqu'à qu'il effectue une action pour interrompre cette transmission.

L'entité de gestion G comporte des moyens E pour encoder ce flux continu en segments, conformes à une technologie sous-jacente, par exemple pour une diffusion HAS.

Les segments encodés peuvent être stockés dans une mémoire contenue ou associée à l'entité de gestion G. Ce stockage peut être temporaire, jusqu'à ce que les segments soient transmis aux clients les ayant requis.

Les segments encodés peuvent être individuellement récupérer par les clients C1, C2.

En outre, dans une étape S4, l'entité de gestion G peut publier des informations relatives au contenu adaptées pour permettre aux clients C1, C2, de récupérer le flux de segments précédemment encodés et de le décoder.

Notamment, dans un mode de réalisation, ces informations peuvent comprendre un ensemble de manifestes générés par l'entité de gestion G et relatifs à ces flux de segments. Ces manifestes (généralement au format XML) contiennent les données permettant aux clients de récupérer les segments, individuellement, dans la résolution souhaitée parmi celles disponibles (c'est-à-dire celles pour lesquelles des segments ont été encodés).

Selon un mode de réalisation, les manifestes et les segments encodés en étape S3 ne sont relatifs qu'à une unique résolution du contenu.

En effet, la transmission adaptative dynamique ABR/HAS est intéressante pour compenser les fluctuations de bande passante sur un réseau de télécommunication. Lorsque la bande passante est faible, le client peut opter pour une résolution basse afin de pouvoir continuer à accéder au contenu, au détriment d'une qualité dégradée.

Il est toutefois raisonnable de penser que la charge et la bande passante d'un réseau local LAN ne varie que peu. Du fait du peu de contraintes réseau, donc, une seule qualité de segments peut être encodée.

On peut ainsi économiser les ressources de l'entité de gestion G (c'est-à-dire de l'équipement la mettant en oeuvre), en évitant d'encoder un même contenu en plusieurs résolutions.

Ainsi, les contenus issus d'un serveur S_{TNT} par exemple de télévision numérique terrestre (TNT) peuvent être accessibles via une entité de gestion G de la même façon que s'il s'agissait de contenus fournis par un service de distribution par contournement, OTT.

Autrement dit, l'offre de contenus de la télévision numérique terrestre, TNT, ou d'autres sources hétérogènes, peut ainsi être intégrée dans un réseau de distribution de contenu CDN (« Content Delivery Network », en anglais).

Ainsi, les clients peuvent avoir une vue unifiée des différents contenus disponibles. Que le contenu soit disponible sur un serveur de contenu à travers un réseau de données (Internet), en mode OTT, ou bien sur un serveur distinct, en mode TNT, peut être invisible pour le client. Il peut ainsi accéder à toutes sortes de contenus, indépendamment de la technologie de diffusion sous-jacente, à travers une interface uniforme fournie par l'entité de gestion G.

L'entité de gestion G peut notamment proposer des comportements applicatifs correspondant aux différents cas de figure, tout en masquant, éventuellement, ces différences pour l'utilisateur des clients.

Au travers d'une interface disponible sur son client C1, C2, en collaboration avec l'entité de gestion G un utilisateur peut naviguer à travers les différents contenus disponibles. Ceux-ci peuvent être disponibles depuis un serveur S_{OTT} fournissant des segments de contenus, ou depuis un serveur S_{TRT} fournissant un flot continu. Ces différents mécanismes peuvent être mis en exergue sur l'interface, pour information, ou bien masqués à l'utilisateur.

Lorsque l'utilisateur sélectionne un contenu disponible sur un serveur S_{OTT}, l'entité de gestion G indique au client, via un manifeste, d'aller chercher les segments correspondant à ce contenu directement sur ce serveur (en mode unicast). Lorsque l'utilisateur sélectionne un contenu disponible sur un serveur S_{TRT}, l'entité de gestion G produit au client un manifeste exposant les segments encodés localement par l'entité de gestion G, et lui indiquant de les récupérer directement sur cette entité de gestion G.

Il est également possible de mettre en place un système de diffusion dynamique adaptative multicast de type mABR (multicast ABR). Auquel cas, les contenus disponibles en multicast trouveront place également sur l'interface proposée par l'entité de gestion G, et seront ainsi disponible aux clients C1, C2.

Ainsi, lorsqu'un contenu fait l'objet d'un trafic important, il peut être rendu disponible via un réseau de diffusion distinct du réseau de télécommunication de données, par exemple par un service de télévision numérique terrestre TRT, et proposé aux clients via l'entité de gestion G qui peut être mise en oeuvre sur un équipement qu'ils utilisent habituellement.

Lorsque ce contenu est également disponible via un serveur S_{OTT} d'un service de distribution par contournement OTT, l'accès à ce contenu peut être masqué et remplacé par l'accès au contenu disponible auprès du service de TRT. Ainsi, l'utilisateur ne pourra plus accéder au contenu via le réseau de données et, ainsi, contribuer à sa charge.

D'une part, l'expérience de l'utilisateur est améliorée puisque l'accès au contenu n'est plus dégradé par la charge du réseau de données ou du serveur S_{OTT}, et d'autre part celui-ci ne contribue plus à cette charge en ne sollicitant plus le serveur S_{OTT}.

On évite ainsi l'engorgement du réseau de télécommunication de données WAN, par le délestage, pour les contenus à forte audience, vers un mode tiers de distribution, distinct du réseau de télécommunication.

En outre, la réception de contenus provenant de ce mode de distribution tiers (par exemple télévision numérique terrestre TNT) peut être mutualisée et redistribuée localement vers un ensemble de clients connecté au réseau local LAN

Précisons enfin ici aussi ici que le terme « entité » peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en oeuvre une fonction ou un ensemble de fonctions telles que décrites pour les modules concernés. De la même manière, un composant matériel correspond à tout élément d'un ensemble matériel (ou hardware) apte à mettre en oeuvre une fonction ou un ensemble de fonctions pour le module concerné (circuit intégré, carte à puce, carte à mémoire, etc.).

Bien entendu, la présente invention n'est pas limitée aux exemples et au mode de réalisation décrits et représentés, mais est défini par les revendications. Elle est notamment susceptible de nombreuses variantes accessibles à l'homme de l'art.

## Revendications

1. Procédé de gestion de l'accès par une entité de gestion (G) à un contenu disponible sur au moins un premier serveur (S_{OTT}) fournissant ledit contenu sous forme de segments de données à travers un réseau de télécommunication de données (WAN) et un deuxième serveur fournissant un service de diffusion distinct dudit réseau de télécommunication de données (WAN), ledit procédé comprenant, dans ladite entité de gestion, une sélection d'un serveur entre ledit premier serveur et ledit deuxième serveur, et, lorsque ledit deuxième serveur est sélectionné :
- une demande d'accès (S2) à un contenu auprès du deuxième serveur (S_{TNT}) ;
- un encodage (S3) d'un flux de segments à partir dudit contenu ;
- une publication (S4) d'informations relatives audit contenu adaptées pour permettre de décoder ledit flux de segments.

2. Procédé selon l'une des revendications précédentes, dans lequel ledit service de diffusion distinct dudit réseau de télécommunication est un service de télévision numérique terrestre, TNT.

3. Procédé selon l'une des revendications précédentes, dans lequel ledit deuxième serveur est sélectionné lorsque ledit contenu est un contenu particulier.

4. Procédé selon la revendication précédente, dans lequel ledit contenu est un contenu dont l'audience est supérieure à un seuil donné.

5. Procédé selon la revendication précédente, comportant une détermination préalable d'un contenu, ladite détermination se basant sur des prédictions de trafic pour des contenus disponibles.

6. Procédé selon l'une des revendications précédentes, dans lequel lesdites informations comprennent un ensemble de manifestes générés par l'entité de gestion et relatifs audit flux de segments.

7. Procédé selon la revendication précédente dans lequel lesdits manifestes et lesdits segments ne sont relatifs qu'à une unique résolution dudit contenu.

8. Entité de gestion (G) de l'accès par un client (C) à des contenus disponibles sur au moins un premier serveur de contenus (S_{OTT}) fournissant lesdits contenus sous forme de segments de données à travers un réseau de télécommunication de données (WAN) et un deuxième serveur (S_{TNT}) fournissant un service de diffusion distinct dudit réseau de télécommunication de données (WAN), ladite entité de gestion comprenant un processeur configuré pour réaliser les étapes suivantes :
- une sélection d'un serveur entre ledit premier serveur et ledit deuxième serveur, et, lorsque ledit deuxième serveur est sélectionné :
- une demande d'accès (S2) à un contenu auprès du deuxième serveur (S_{TNT}) ;
- un encodage (S3) d'un flux de segments à partir dudit contenu ;
- une publication (S4) d'informations relatives audit contenu adaptées pour permettre audit client de décoder ledit flux de segments.

9. Passerelle comportant une entité de gestion (G) selon la revendication précédente.

10. Client comportant une entité de gestion (G) selon la revendication 8.

11. Programme d'ordinateur apte à être mis en oeuvre sur une entité de gestion, le programme comprenant des instructions de code qui, lorsqu'il est exécuté par un processeur, réalise les étapes du procédé définie dans les revendications 1 à 7.

12. Support de données sur lequel a été mémorisé au moins une série d'instructions de code de programme pour l'exécution d'un procédé selon l'une des revendications 1 à 7.
